# EUROPEAN PATENT APPLICATION

(11) **EP 2 819 020 A1**
(43) Date of publication of application: **31.12.2014**
(21) Application number: 12868986.6
(22) Date of filing: 20.02.2012
(51) Int. Cl.: G06F 13/00

(54) **INFORMATION SYSTEM MANAGEMENT DEVICE AND INFORMATION SYSTEM MANAGEMENT METHOD AND PROGRAM**

(71) Applicant: Mitsubishi Electric Corporation, Tokyo 100-8310 (JP)
(72) Inventor: OMATSU, Fumio, Tokyo 100-8310 (JP)
(74) Representative: Hopkin, Tobias J.B.
(86) International application number: PCT/JP2012/053939
(87) International publication number: WO 2013/124947

(57) **Abstract**

Using a dependency table 202 generated from communication with a component in operation of a system configuration element and describing the component in operation of each system configuration element and a dependency between the system configuration elements, and a CFIA analysis table 203 which describes a redundancy detail of each system configuration element, a design information integration part 26 associates the redundancy detail to the component in operation of each system configuration element. A display part 29 displays the component in operation of each system configuration element and a dependency between system configuration elements. Based on associating by the design information integration part 26, the display part 29 displays the redundancy detail of each system configuration element in correspondence with displaying the component in operation of each system configuration element.

## Description

### Technical Field

The present invention relates to a technique which manages a redundant information system.

### Background Art

A conventional configuration management apparatus which uses a CMDB (Configuration Management Database) and the like communicates with devices (a server, a terminal, a network device, software, a storage, and the like) that constitute an information system which is managed, and gathers information. The configuration management apparatus stores the dependencies between the devices in a database and the like. The configuration management apparatus thus gathers and accumulates the dependencies between the devices automatically (for example, Patent Literature 1 and 2, and Non-Patent Literature 1).

A method is also proposed in which a configuration management apparatus monitors connection from a client (terminal) to a software service on the server and automatically gathers and accumulates the dependencies between devices of the information system (for example, Patent Literature 3).

### Citation List

### Patent Literature

Patent Literature 1: JP 2004-103015
Patent Literature 2: JP 2005-275533
Patent Literature 3: JP 2006-178834

### Non-Patent Literature

Non-Patent Literature 1: Bart Jacob et al., "IBM (Registered Trademark) Tivoli Application Dependency Discovery Manager Capabilities and Best Practices" IBM (Registered Trademark) Redbook, February 2002 issue, p. 8-9

### Summary of Invention

### Technical Problem

The conventional configuration management apparatus, when gathering and accumulating the dependencies between the devices automatically, can recognize the existences of the respective devices and communication relations between the devices from communication with the devices or from the connection statuses between the devices.

In order to recognize the combination of the redundant configurations between the devices and the type of the redundancy, for example, it is necessary to prepare a function that analyzes the setting information of software and the like having a redundant mechanism, or to input the combination of the redundancies and the type of the redundancy manually, which poses a problem of low feasibility and a high operation load.

It is a major object of the present invention to solve these problems. The present invention mainly aims to realize a configuration that can display the redundancy details of an information system.

### Solution to Problem

An information system management apparatus according to the present invention manages an information system including a plurality of system configuration elements which are each made to have redundancy using two or more components, the information system management apparatus including:
a dependency information input part which receives as input, dependency information generated from communication with a component in operation of each system configuration element and describing the component in operation of each system configuration element and a dependency between the system configuration elements;
a redundancy detail information input part which receives as input, redundancy detail information that describes a redundancy detail of each system configuration element;
an information associating part which associates the redundancy detail described in the redundancy detail information to the component in operation of each system configuration element, the component being described in the dependency information; and
a display part which displays the component in operation of each system configuration element and a dependency between the system configuration elements, the component and the dependency being described in the dependency information, and displays, based on associating by the information associating part, the redundancy detail of each system configuration element in correspondence with displaying the component in operation of each system configuration element.

### Advantageous Effects of Invention

According to the present invention, the redundancy details of a system configuration element can be displayed, in addition to a component in operation in a system configuration element and dependencies between system configuration elements.

### Brief Description of Drawings

Fig. 1 shows a configuration example of a configuration management apparatus according to Embodiment 1.
Fig. 2 shows an example of a view according to Embodiment 1.
Fig. 3 shows an example of an operation device overview table according to Embodiment 1.
Fig. 4 shows an example of a dependency table according to Embodiment 1.
Fig. 5 shows an example of a CFIA analysis table according to Embodiment 1.
Fig. 6 shows an example of a host name/IP address correspondence table according to Embodiment 1.
Fig. 7 shows an example of a configuration management table according to Embodiment 1.
Fig. 8 is a flowchart showing an operation example of the configuration management apparatus according to Embodiment 1.
Fig. 9 shows an example of the view according to Embodiment 1.
Fig. 10 shows an example of the view according to Embodiment 1.
Fig. 11 is a flowchart showing an operation example of a configuration management apparatus according to Embodiment 2.
Fig. 12 shows an example of a view according to Embodiment 2.
Fig. 13 shows an example of a host name instruction rule according to Embodiment 3.
Fig. 14 shows an example of a host naming rule table according to Embodiment 3.
Fig. 15 shows an example of a software overview table according to Embodiment 4.
Fig. 16 shows a configuration example of a configuration management apparatus according to Embodiment 5.
Fig. 17 shows a configuration example of a configuration management apparatus according to Embodiment 6.
Fig. 18 shows an example of a view according to Embodiment 6.
Fig. 19 shows an example of a conventional view.
Fig. 20 shows a hardware configuration example of the configuration management apparatus according to Embodiments 1 to 6.

### Description of Embodiments

### Embodiment 1.

A configuration management apparatus according to Embodiments 1 to 6 has as its major object to recognize the combination and types of redundancies in system configuration elements automatically when dependencies are generated between the system configuration elements, and to display the recognized combination and types of the redundancies to the user.

Examples of redundancy configurations include methods such as load balance, failover cluster, and cold standby.

With load balance, two or more devices provide services constantly, so that even if one device fails, another device replaces the failed device.

With failover cluster, a standby-system device is provided that can automatically replace an active-system device, and when the active-system device fails, switching over from the failed device to the standby-system device is carried out automatically so that the standby-system device replaces the failed device.

With cold standby, an alternate device which is normally out of operation is provided to replace an active-system device, and when the active-system device fails, the alternate device is started manually to replace the failed device.

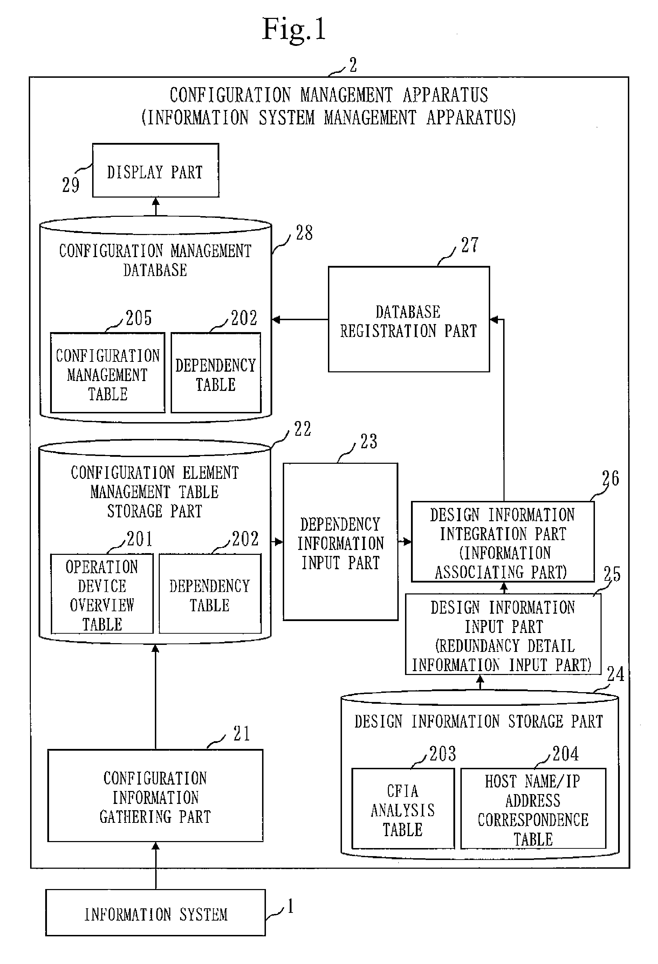

Fig. 1 shows a configuration example of a configuration management apparatus 2 according to this embodiment.

The configuration management apparatus 2 is an example of an information system management apparatus.

The configuration management apparatus 2 is connected to an information system 1 which is an actual environment for a business system, and manages the information system 1.

More specifically, the configuration management apparatus 2 gathers information on system configuration elements from the information system 1, and analyzes and saves the dependencies.

The information system 1 is constituted by a network, a server apparatus, a terminal apparatus, and the like.

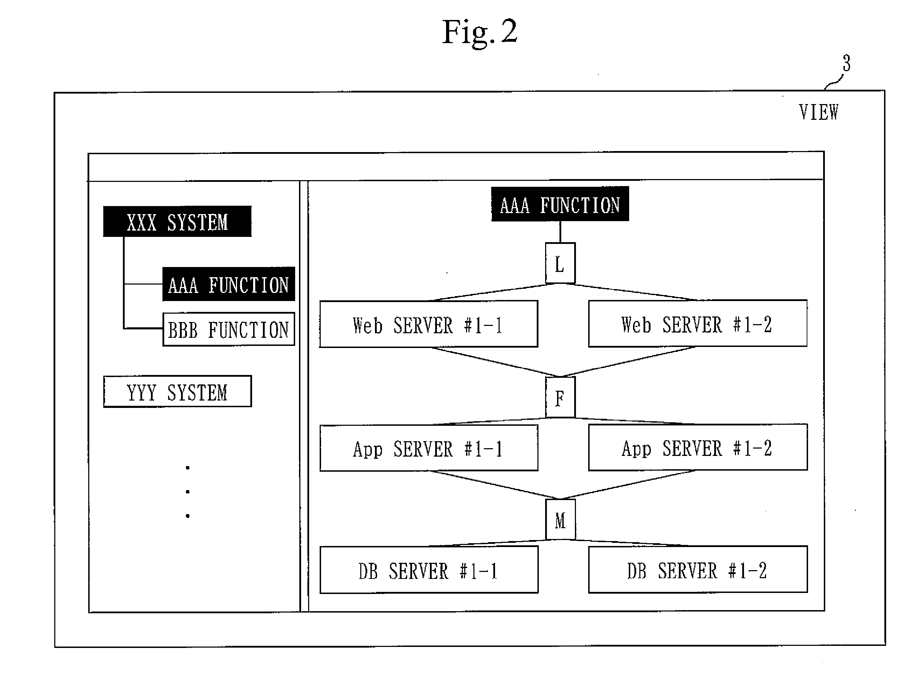

The configuration management apparatus 2 displays a view 3 exemplified in Fig. 2.

The information system 1 managed by the configuration management apparatus 2 is constituted by, for example, an XXX system, a YYY system, and the like, as shown in the view 3 of Fig. 2. Note that the XXX system is provided with an AAA function and a BBB function.

Fig. 2 shows the device configuration of the AAA function of the XXX system.

As shown in Fig. 2, a Web server #1-1, a Web server #1-2, an App server #1-1, an App server #1-2, a DB server #1-1, and a DB server #1-2 are present in the AAA function of the XXX system.

"Web server #1" in the Web server #1-1 and Web server #1-2, "App server #1" in the App server #1-1 and App server #1-2, and "DB server #1" in the DB server #1-1 and DB server #1-2 each indicate a system configuration element.

The Web server #1-1 and the Web server #1-2 are components employed for redundancy in the system configuration element "Web server #1".

Similarly, the App server #1-1 and the App server #1-2 are components employed for redundancy in the system configuration element "App server #1".

Similarly, the DB server #1-1 and the DB server #1-2 are components employed for redundancy in the system configuration element "DB server #1".

In this manner, the information system 1 managed by the configuration management apparatus 2 includes a plurality of system configuration elements. Each system configuration element uses two or more components for the purpose of redundancy.

The components are also referred to as devices.

The configuration management apparatus 2 is constituted by a configuration information gathering part 21, a configuration element management table storage part 22, a dependency information input part 23, a design information storage part 24, a design information input part 25, a design information integration part 26, a database registration part 27, a configuration management database 28, and a display part 29.

The configuration information gathering part 21 communicates with the information system 1, detects components in operation within the information system 1, and detects the dependencies between the components in operation within the information system 1, that is, the dependencies between the system configuration elements.

The configuration information gathering part 21 generates an operation device overview table 201 and a dependency table 202 which indicate the components in operation within the information system 1 and the dependencies between the system configuration elements, and stores the generated operation device overview table 201 and the dependency table 202 in the configuration element management table storage part 22.

The configuration element management table storage part 22 stores the operation device overview table 201 and the dependency table 202.

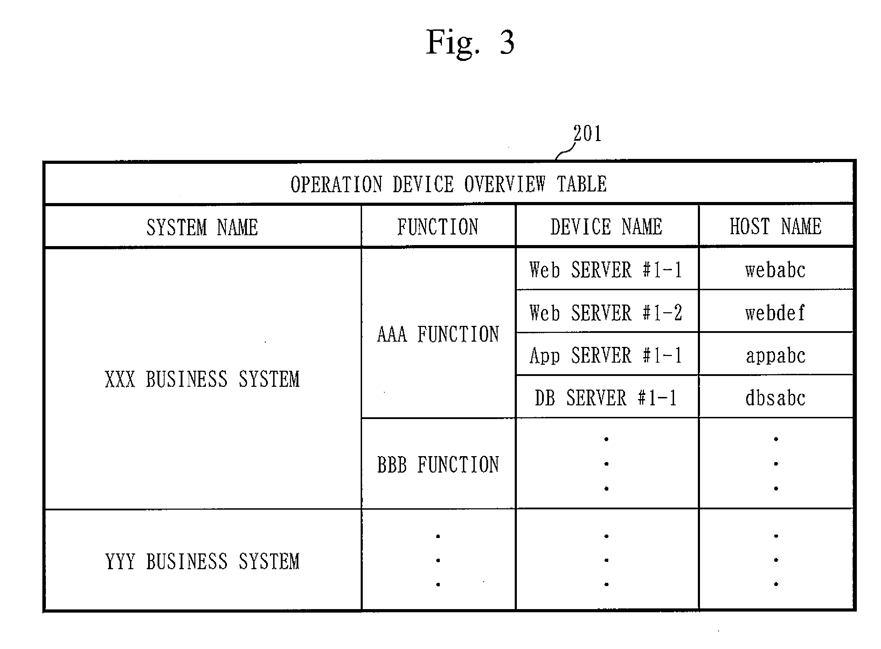

The operation device overview table 201 is a table as exemplified in Fig. 3 and describes the components in operation within the information system 1.

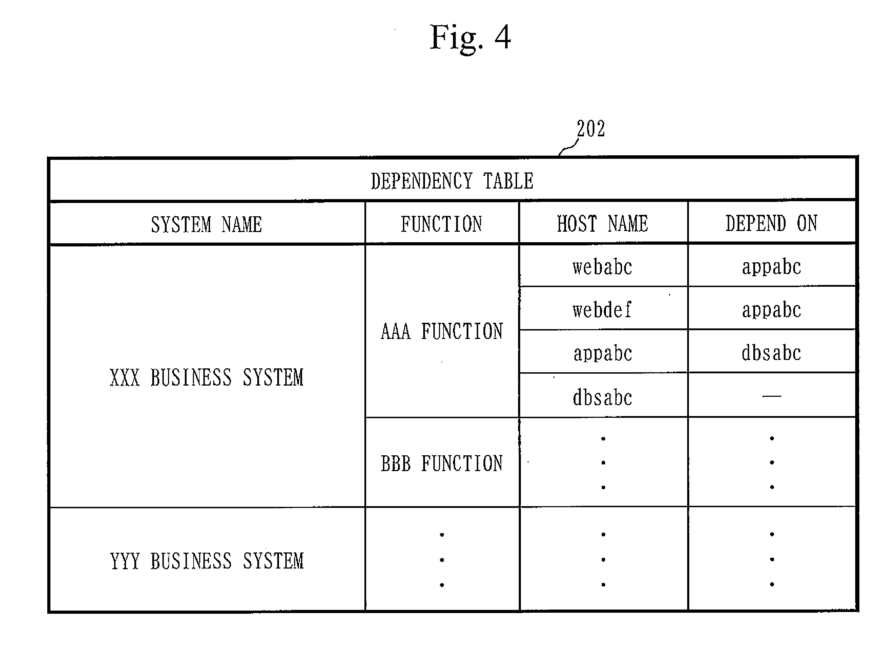

The dependency table 202 is a table as exemplified in Fig. 4 and describes the dependencies between the system configuration elements.

The details of the operation device overview table 201 and dependency table 202 will be explained later with reference to Figs. 3 and 4.

The dependency table 202 is an example of dependency information.

The dependency information input part 23 receives as input (reads) the dependency table 202 from the configuration element management table storage part 22.

The design information storage part 24 stores a CFIA analysis table 203 and host name/IP address correspondence table 204.

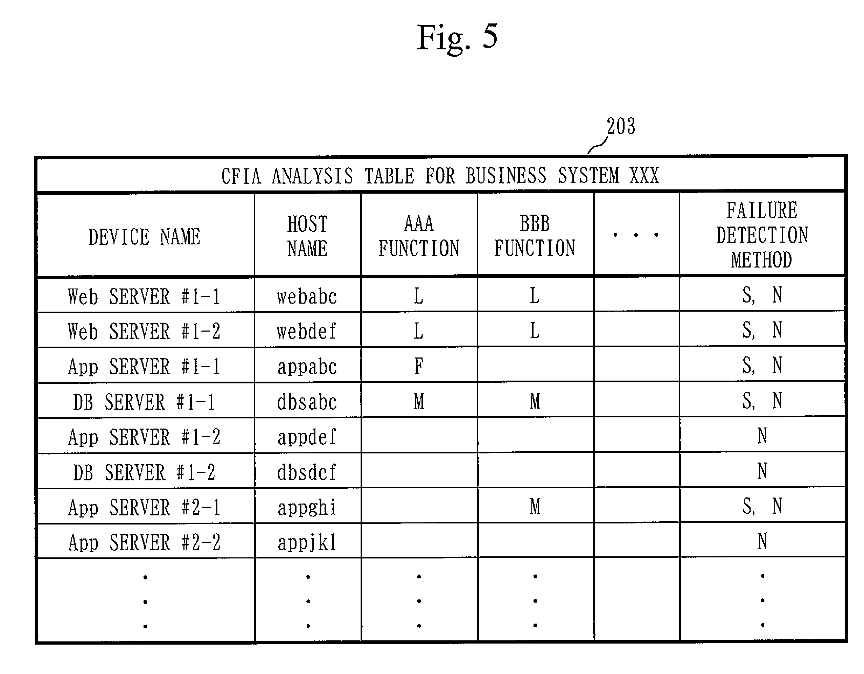

The CFIA analysis table 203 is a table as exemplified in Fig. 5 and describes all components included in the information system 1.

That is, the CFIA analysis table 203 describes not only the main-system components but also the standby-system components of each system configuration element.

The CFIA analysis table 203 also describes the redundancy detail of each system configuration element.

For example, "L", "F", and "M" shown in the CFIA analysis table 203 indicate the redundancy methods, in which L (Load Balance) represents redundancy by load balance, F (Failover) represents redundancy by failover, and M (Manual) represents redundancy by manual switching (cold standby).

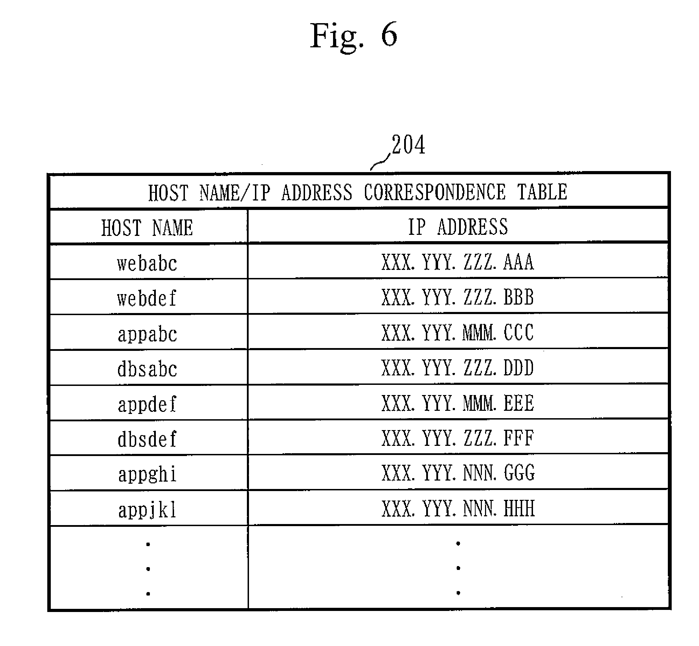

The host name/IP address correspondence table 204 is a table as exemplified in Fig. 6 and describes the communication address (IP address) of each component.

The details of the CFIA analysis table 203 and host name/IP address correspondence table 204 will be explained later with reference to Figs. 5 and 6.

The CFIA analysis table 203 is an example of redundancy detail information. The host name/IP address correspondence table 204 is an example of communication address information.

The design information input part 25 receives as input (reads) the CFIA analysis table 203 and the host name/IP address correspondence table 204 from the design information storage part 24.

The design information input part 25 is an example of a redundancy detail information input part.

Using the dependency table 202, the CFIA analysis table 203, and the host name/IP address correspondence table 204, the design information integration part 26 associates the redundancy details described in the CFIA analysis table 203 to the components in operation described in the dependency table 202.

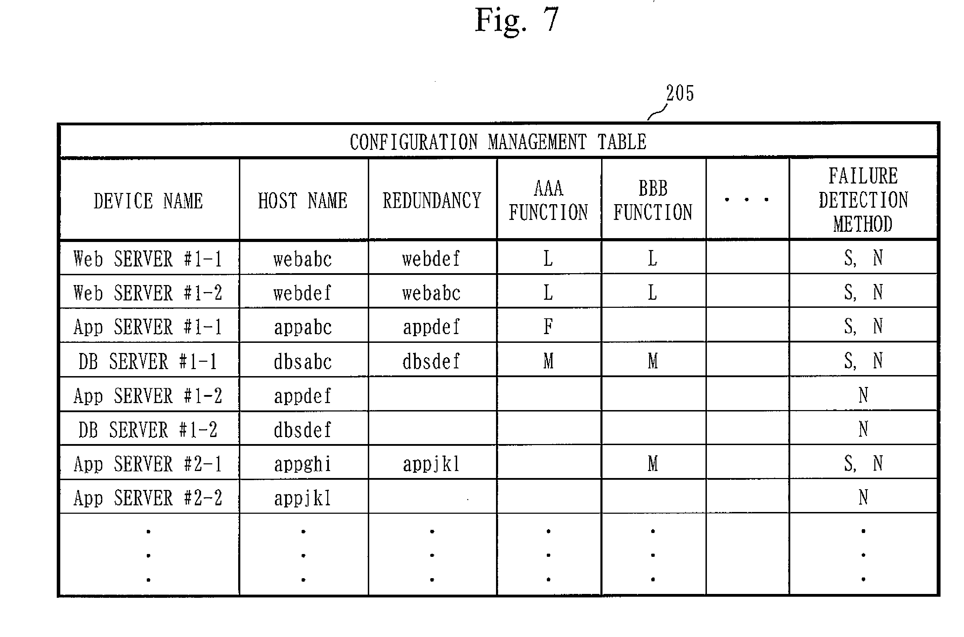

More specifically, the design information integration part 26 generates the configuration management table 205 as exemplified in Fig. 7.

The value listed under "redundancy" and the value listed under "host name" in the configuration management table 205 associate the standby component of each system configuration element to the component in operation described in the dependency table 202.

The symbol ("L", "F", or "M") listed under "AAA function" and indicating the redundancy method and the value listed under "host name" in the configuration management table 205 associate the redundancy method of each system configuration element to the component in operation described in the dependency table 202.

The details of the configuration management table 205 will be explained later with reference to Fig. 7.

The design information integration part 26 is an example of an information associating part.

The database registration part 27 registers a configuration management table 205 generated by the design information integration part 26 and the dependency table 202, with the configuration management database 28.

The configuration management database 28 stores the configuration management table 205 and the dependency table 202.

The display part 29 reads the configuration management table 205 and the dependency table 202 from the configuration management database 28, and generates the view 3 as shown in Fig. 2 based on the configuration management table 205 and the dependency table 202.

The details of the operation device overview table 201, the dependency table 202, the CFIA analysis table 203, the host name/IP address correspondence table 204, and the configuration management table 205 will now be explained.

The operation device overview table 201 is constituted by items "system name", "function", "device name", and "host name", as shown in Fig. 3.

The devices shown under "device name" are represented by the names of the components detected by the configuration information gathering part 21 through communication with the respective devices included in the information system 1, as described above.

"Host name" is represented by the IDs (Identifiers) of the components indicated under "device name".

As shown in Fig. 4, the dependency table 202 is constituted by items "system name", "function", "host name", and "depend on".

The IDs shown under "host name" are the same as the IDs shown under "host name" in the operation device overview table 201 of Fig. 3.

Namely, these IDs are the IDs of the components in operation detected by the configuration information gathering part 21.

The IDs under "depend on" are the IDs of the components on which components corresponding to the IDs under "host name" depend for operation.

Namely, for operation, webabc (Web server #1-1) and webdef (Web server #1-2) utilize the resources of appabc (App server #1-1) in some way.

Also, appabc (App server #1-1) depends on dbsac (DB server #1-1).

As described above, the dependency table 202 also is generated by the configuration information gathering part 21.

The operation device overview table 201 is employed for generating the dependency table 202. In the processes by the design information integration part 26 and the display part 29, the operation device overview table 201 is not always necessary, and only the dependency table 202 suffices.

Hence, the configuration element management table storage part 22 may store only the dependency table 202.

The dependency table 202 may be conventional CMDB information.

Fig. 5 shows an example of the CFIA analysis table 203.

Fig. 5 is an example of the analysis table of CFIA (Component Failure Impact Analysis) conducted at the time of information system design.

The table of Fig. 5 shows the CFIA analysis result of one business system. In this table, for each device, the host name, the influence exerted on the function (the AAA function and BBB function in the case of Fig. 5) when the device fails, and a failure detection method of the system configuration element are formulated.

The influence exerted on the function when the device fails is indicated by the symbol of redundancy (for example, L, F, or M).

As described above, L represents redundancy by load balance, F represents redundancy by failover, and M represents redundancy by manual switching.

A vacant field indicates that failure of a corresponding device exerts no influence on the function concerned.

The field of the failure detection method is where a symbol such as S or F is entered. Note that S (Server surveillance) indicates detection by a server surveillance system and that N (Network surveillance) indicates detection by a network surveillance system.

Fig. 6 shows an example of the host name/IP address correspondence table 204.

Fig. 6 is a correspondence table of the host name and the IP address, and is formed such that an IP address can be searched using the host name of the device.

The CFIA analysis table 203 and the host name/IP address correspondence table 204 may be collectively called "system design information".

Fig. 7 shows an example of the configuration management table 205.

In the configuration management table 205 shown in Fig. 7, an item "redundancy" is added, when compared with the CFIA analysis table 203.

The ID in "redundancy" and the ID in "host name" associate a standby component among two or more components employed for redundancy of each system configuration element to the component in operation described in the dependency table 202 (Fig. 4).

For example, in the configuration management table 205, standby appdef (App server #1-2) and appabc (App server #1-1) which is described as being in operation in the dependency table 202 are associated.

Also, for each system configuration element, the symbol ("L", "F", or "M") representing the redundancy method described under "AAA function" and the value described under "host name" associate the redundancy method to the component in operation described in the dependency table 202.

For example, in the configuration management table 205, the redundancy method "F" and appabc (App server #1-1) which is described as being in operation in the dependency table 202 are associated.

The display part 29 reads the configuration management table 205 and the dependency table 202 from the configuration management database 28, interprets the configuration management table 205 and the dependency table 202, and generates the view 3 as shown in Fig. 2.

The view 3 displays the components in operation of each system configuration element, and the dependencies between the system configuration elements. The view 3 also displays the redundancy details of each system configuration element in correspondence with displaying components in operation of each system configuration element, based on the configuration management table 205 generated by the design information integration part 26.

As the redundancy details, the redundancy method ("L", "F", or "M") of each system configuration element and the component in operation of each system configuration element are displayed.

In Patent Literatures 1 to 3, the view is generated substantially only with the use of the dependency table 202.

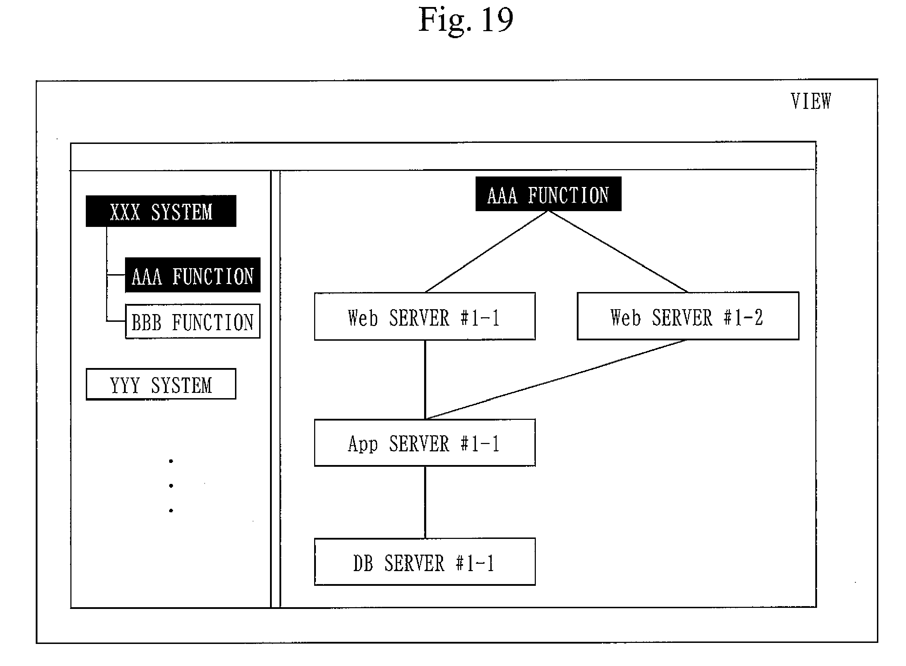

When using only the dependency table 202, a view shown in Fig. 19 is generated.

More specifically, only components in operation within the information system 1 and the dependencies between the components (system configuration elements) are displayed.

In contrast to this, according to this embodiment, for the components in operation, the redundancy methods and the standby components are displayed, in addition to the display of the components in operation and the dependencies between the components (system configuration elements).

The operation of the configuration management apparatus 2 according to this embodiment will be explained.

First, the configuration information gathering part 21 communicates with the information system 1, gathers device information for each system configuration element, such as the network, the server apparatus, the terminal apparatus, and the like, generates the operation device overview table 201, and saves the generated operation device overview table 201 in the configuration element management table storage part 22.

Subsequently, regarding the gathered system configuration elements, the dependency information input part 23 analyzes the dependencies between the system configuration elements from the communication relations between the respective system configuration elements, generates the dependency table 202, and saves the generated dependency table 202 in the configuration element management table storage part 22.

The configurations and the operations of the configuration information gathering part 21 and the configuration element management table storage part 22 may follow any method of Patent Literatures 1 to 3 and Non-Patent Literature 1.

Subsequently, the dependency information input part 23 reads the dependency table 202 from the configuration element management table storage part 22.

The design information input part 25 reads the CFIA analysis table 203 from the design information storage part 24.

The design information integration part 26 generates the configuration management table 205 indicating the redundancy combinations and the redundancy methods of the system configuration elements from the dependency table 202 and the CFIA analysis table 203.

The database registration part 27 registers the dependency table 202 and the configuration management table 205 which is generated by the design information integration part 26, with the configuration management database 28.

The display part 29 generates the view 3 that reflects the contents of the configuration management table 205 and dependency table 202 of the configuration management database 28, and displays the generated view 3.

The processing content of the configuration management apparatus 2 according to this embodiment will be further explained.

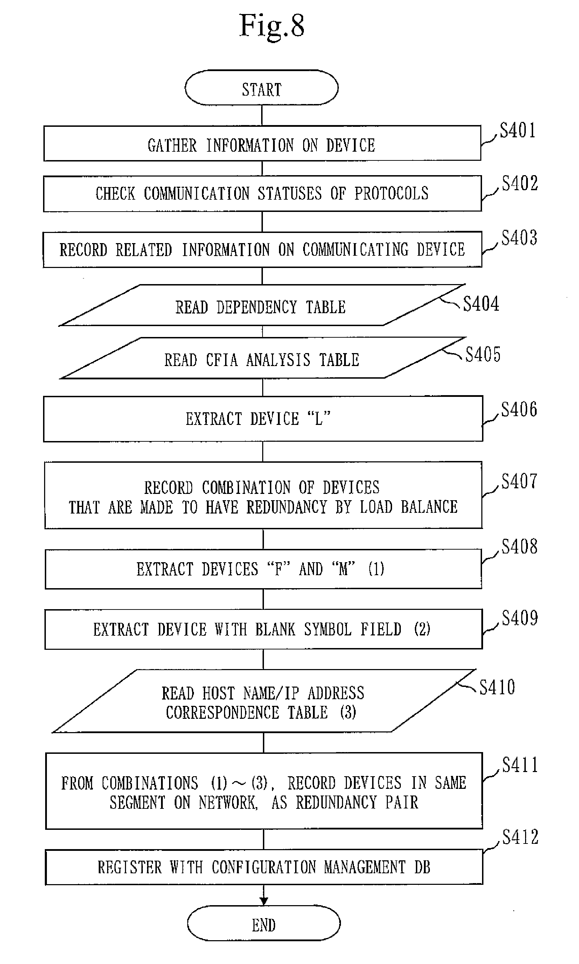

Fig. 8 is a flowchart explaining the operation of the configuration management apparatus 2 of Fig. 1.

S401, S402, and S403 indicate the processes done by the configuration information gathering part 21 of Fig. 1.

More specifically, the configuration information gathering part 21 gathers information on the system configuration elements, checks the communication statuses of the respective protocols, and generates the operation device overview table 201 indicating the devices that conduct communication and the dependency table 202 indicating the dependencies between the devices. The configuration information gathering part 21 stores the generated operation device overview table 201 and dependency table 202, in the configuration element management table storage part 22.

Then, in S404, the dependency information input part 23 reads the dependency table 202 (Fig. 4) from the configuration element management table storage part 22, and passes the read dependency table 202 to the design information integration part 26.

In S405, the design information input part 25 reads the CFIA analysis table 203 (Fig. 5) from the design information storage part 24, and passes the read CFIA analysis table 203 to the design information integration part 26.

S406 to S411 show the processes done by the design information integration part 26 of Fig. 1.

More specifically, in S406, the design information integration part 26 extracts a device with a symbol "L" from the CFIA analysis table 203.

The combination of the devices made redundant by load balance thus is found out. The design information integration part 26 stores the combination (S407).

The design information integration part 26 extracts devices with symbols "F" and "M" from the CFIA analysis table 203 in S408, and extracts devices with blank symbol fields in S409.

A row with a blank symbol field signifies that failure of a corresponding device exerts no influence on the function of the system. Hence, it is possible to determine that this row corresponds to an alternate device (standby device), and that this alternate device is a redundancy counterpart for a device with a symbol "F" or "M".

Then, in S410, the design information input part 25 reads the host name/IP address correspondence table 204 (Fig. 6) from the design information storage part 24, and passes the read host name/IP address correspondence table 204 to the design information integration part 26.

In S411, the design information integration part 26 searches redundancy source devices (main-system component) extracted in S408 and the redundancy counterpart devices (standby-system component) extracted in S409 for a combination present in the same network segment, and determines a redundancy pair.

For example, assume a case where a redundancy counterpart device for the App server #1-1 of Fig. 5 is to be extracted.

The IP address of the App server #1-1 is "XXX. YYY. MMM. CCC", as shown in Fig. 6.

The design information integration part 26 extracts an IP address "XXX. YYY. MMM. EEE" having a network segment coinciding with a network segment "XXX. YYY. MMM." of this IP address, and determines this IP address as being the IP address of a device with "host name: appdef".

As a result, the design information integration part 26 can describe on the configuration management table 205 that the redundancy counterpart device of the APP server #1-1 is the App server #1-2.

With the above processes, the design information integration part 26 generates the configuration management table 205 (Fig. 7) indicating redundancy pairs for "F" and "M" determined in S411 and redundancy pairs for "L" extracted in S407.

Finally, in S412, the database registration part 27 saves the configuration management table 205 and the dependency table 202, in the configuration management database 28.

After that, the display part 29 generates the view 3 shown in Fig. 2 from the configuration management table 205 and the dependency table 202, and displays the generated view 3.

The display part 29 makes a drawing to depict devices in operation of the respective system configuration elements and the dependencies between the system configuration elements based on the dependency table 202. The display part 29 also draws, for the devices in operation, the redundancy methods shown in the configuration management table 205 and the standby devices in correspondence with each other, thus displaying the view 3 of Fig. 2.

As described, information on the system design information is added to the automatically gathered information on the system configuration element, and analysis is made. This enables displaying the redundancy relations in the system configuration elements and the redundancy types (load balance, failover, manual operation, and the like), as the dependencies between the system configuration elements in the business system indicated as the view.

Hence, when a failure occurs in a device, determination can be made as to whether or not the failure influences the operation of the business system, whether or not switching over to the redundancy system is carried out, and whether or not the manual operation is necessary, or the like. Thus, a system failure can be treated quickly.

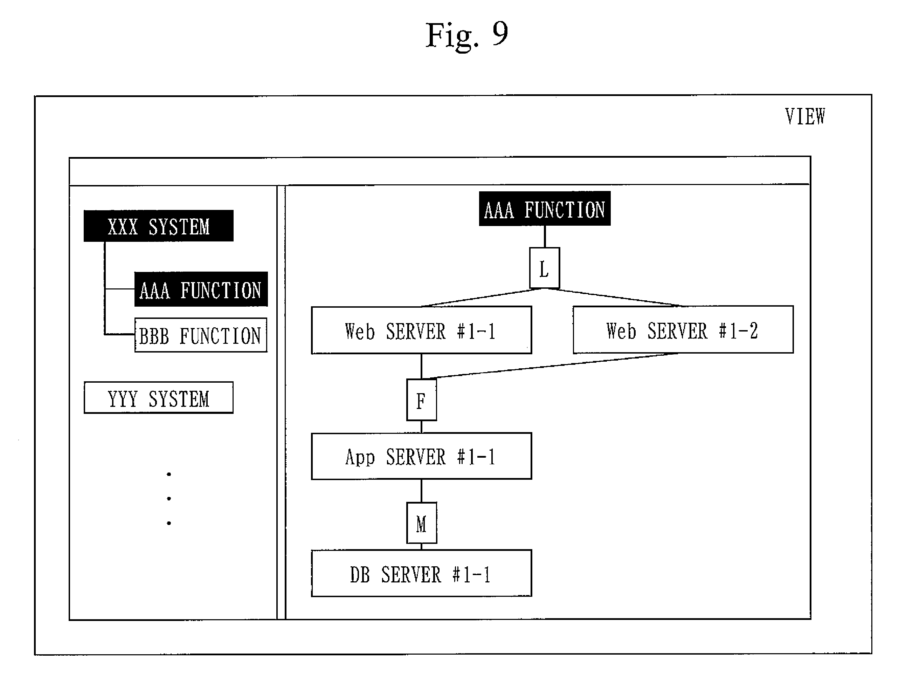

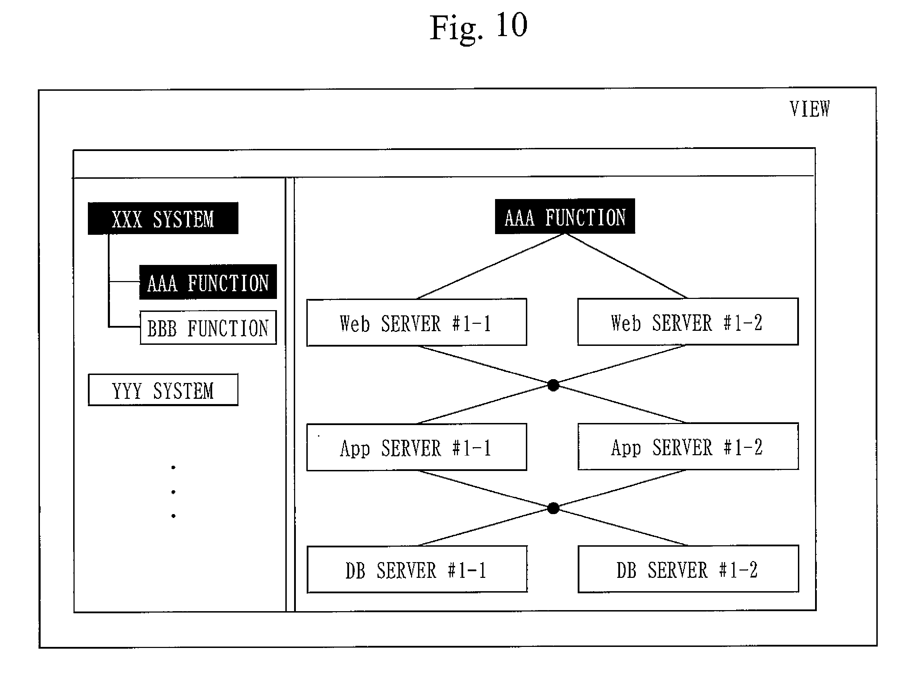

The view 3 in Fig. 2 displays both the redundancy methods and the standby devices. Alternatively, only the redundancy methods may be displayed (standby devices are not displayed), as in Fig. 9, or only the standby devices may be displayed (redundancy methods are not displayed), as in Fig. 10.

This embodiment has explained a dependency generation system for system configuration information, which is provided with the following means and fetches system design information, to recognize combinations and types of system redundancy configurations:
(a) a configuration information gathering part which communicates with an information system environment and gathers information on system configuration elements;
(b) a configuration element management table which stores the gathered information on the system configuration elements;
(c) a dependency information input part which receives as input, information on the dependencies between the system configuration elements which is generated from the information gathered from the system configuration elements;
(d) design information input part which receives as input, design information on the information system;
(e) a design information integration part which integrates the dependencies of (c), with the combinations and types of the redundancy configurations extracted from the system design information;
(f) a database registration part which saves in a database, the information generated in (e);
(g) a configuration management database which saves the gathered information on the system configuration elements and the generated information on the dependencies between the system configuration elements; and
(h) a display part which displays to the user the information of the configuration management database.

### Embodiment 2.

In Embodiment 1 described above, the redundancy detail of one business system is determined using one CFIA analysis table (Fig. 5).

Embodiment 2 shows a case in which the redundancy details of a plurality of business systems are determined using two or more CFIA analysis tables.

In this embodiment as well, a configuration management apparatus 2 has the same configuration as that shown in Fig. 1.

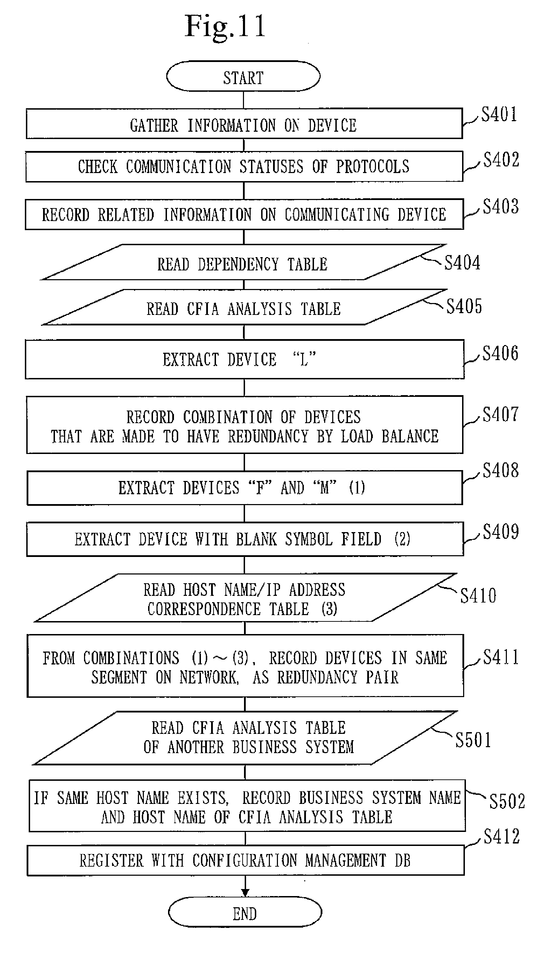

Fig. 11 is a flowchart showing the processing content of the configuration management apparatus 2 according to Embodiment 2.

Fig. 11 is the same as Fig. 8 except for S501 and S502, and an explanation is accordingly omitted.

With processes until S411, the redundancy pair of the system configuration elements is determined for one CFIA analysis table (one business system). After that, in S501, the design information input part 25 reads the CFIA analysis table of another business system.

Then, in S502, through comparison with the 1st CFIA analysis table, if the same host name as in the 1 st CFIA analysis table exists, the design information integration part 26 records the business system name and host name of the CFIA analysis table. In S412, the design information integration part 26 registers the recoded information with a configuration management database 28.

More specifically, the design information integration part 26 generates configuration management tables 205 for information systems 1 of the respective business systems and compares the generated configuration management tables 205. If two configuration management tables 205 include the same host name in common, the design information integration part 26 records the host name included in the two configuration management tables 205 and the business system names of the business systems to which the two configuration management tables 205 are intended, in the configuration management database 28 through a database registration part 27. The design information integration part 26 stores the two configuration management tables 205 into the configuration management database 28 through the database registration part 27.

The design information integration part 26 also stores the dependency table 202 in the configuration management database 28 through the database registration part 27.

In this example, the two configuration management tables 205 are set in correspondence with each other. When setting three or more configuration management tables 205 in correspondence with each other, the same process takes place.

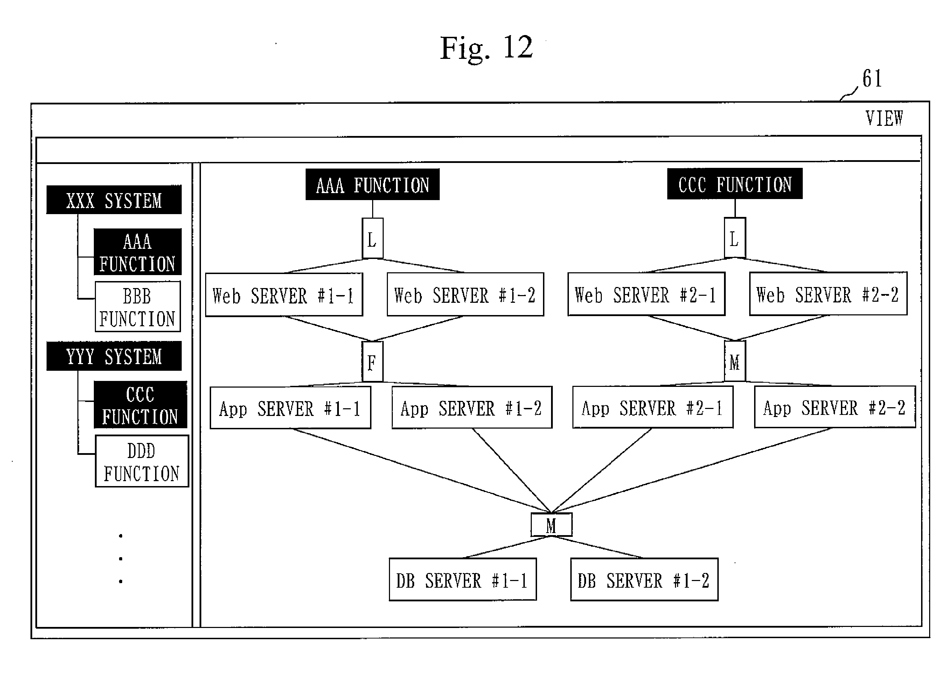

Fig. 12 shows a view 61 of Embodiment 2.

The view 61 is displayed in place of the view 3 in Fig. 1 of Embodiment 1.

By performing the processes of Fig. 11 and analyzing a plurality of configuration management tables 205, it is detected that a DB server #1 is utilized by the AAA function of the XXX system and the CCC function of the YYY system in common. Fig. 12 shows this detection.

In this embodiment, a display part 29 reads the two configuration management tables 205 corresponding to the business system names recorded by the design information integration part 26, from the configuration management database 28. The display part 29 also reads two dependency tables 202 corresponding to the two configuration management table 205 from the configuration management database 28. The display part 29 also reads information on the host names recorded by the design information integration part 26.

As with Embodiment 1, for each business system, using the configuration management table 205 and the dependency table 202, the display part 29 shows devices in operation, standby devices, and the redundancy method of each system configuration element. The display part 29 makes a drawing to depict the dependencies between the system configuration elements. The display part 29 also makes a drawing to depict that the same system configuration element (the DB server #1 in the case of Fig. 12) is redundantly included in the two business systems.

As described above, by analyzing a plurality of pieces of system design information, the redundancy relations between the system configuration elements of the plurality of business systems and the types of redundancies (load balance, failover, manual operation, and the like) can be displayed in the form of a view.

Hence, even if the plurality of business systems share the same system configuration element, when a failure occurs in the system configuration element, determination can be made as to whether or not the failure influences the operations of the business systems, whether or not switching over to the redundancy system is carried out, and whether or not the manual operation is necessary. Thus, a system failure can be treated quickly.

This embodiment has explained a dependency generation system for system configuration information, in which the design information input part can receive as input, the design information of a plurality of business systems, and the design information integrating part analyzes the information, so that the system configuration element that is used between the business systems in common can be recognized.

### Embodiment 3.

In above Embodiments 1 and 2, the redundancy details are determined using the CFIA analysis table (Fig. 5) and the host name/IP address correspondence table (Fig. 7). An example that utilizes a host naming rule will be presented.

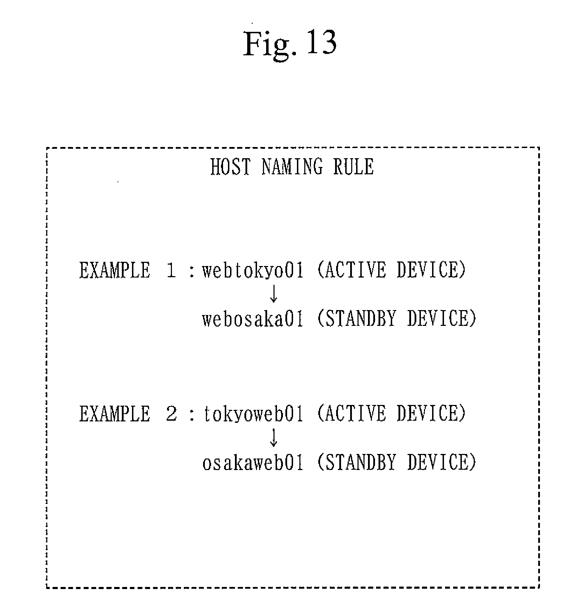

Fig. 13 shows an example of the host naming rule.

In Example 1, 3 upper digits represent the business type, 4 to 8 digits represent the location of installation, and 9 to 10 digits represent arbitrary numerical values.

In Example 1, the redundancy counterpart can be determined by matching the 3 upper digits.

More specifically, a design information integration part 26 can determine a device the values of the 3 upper digits of which are common, as the redundancy counterpart.

In Example 2, 1st to 5th digits express the location of installation, and 6th to 8th digits express the business type.

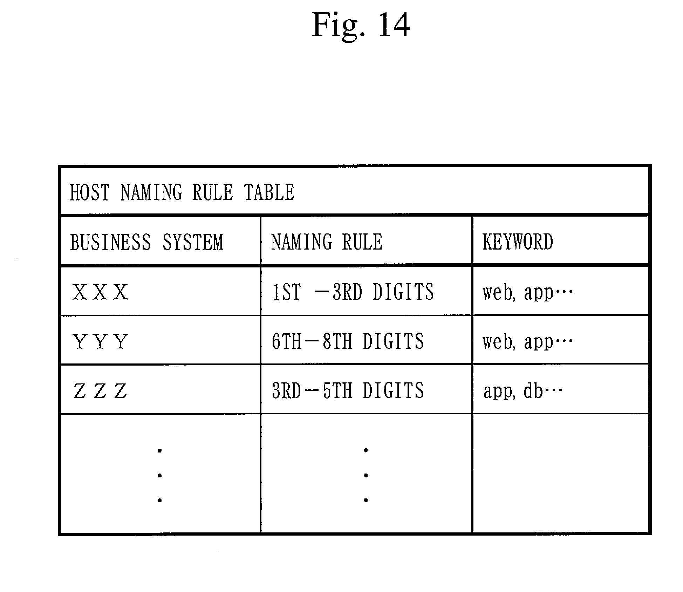

In this embodiment, a host naming rule table shown in Fig. 14 is prepared in a design information storage part 24 to reflect this host naming rule.

The host naming rule table defines, for each business system, what keyword is to be assigned to which consecutive digits of the host name, as a naming rule.

In the XXX system, a host name having "web" or "app" for its 1st to 3rd digits is extracted, and the redundancy counterpart is determined.

In this embodiment, the host naming rule table of Fig. 14 is used in place of or together with the host name/IP address correspondence table 204 of Embodiment 1.

More specifically, according to this embodiment, in S411 of Fig. 8, when the design information integration part 26 selects a device to be paired with the redundancy source device (main-type component) extracted in S408 from among the redundancy counterpart devices (standby-system components) extracted in S409, the host naming rule table of Fig. 14 is used.

Except for this, the operation of Embodiment 3 is the same as that of Embodiment 1.

As described above, the accuracy in determining the redundancy counterpart can be improved by utilizing a plurality of pieces of design information such as the host naming rule.

This embodiment has explained a dependency generation system for system configuration information, in which the design information input part receives as input, a plurality of types of design information, and the accuracy in recognizing the combination of the redundancy configurations is improved in the design information integrating part.

### Embodiment 4.

In Embodiments 1 and 2, the redundancy details are determined using the CFIA analysis table (Fig. 5) and the host name/IP address correspondence table (Fig. 7). An example will now be described that utilizes an overview of software implemented in the respective devices.

In the redundancy system, generally, the same software group is implemented in a main-system device and a standby-system device.

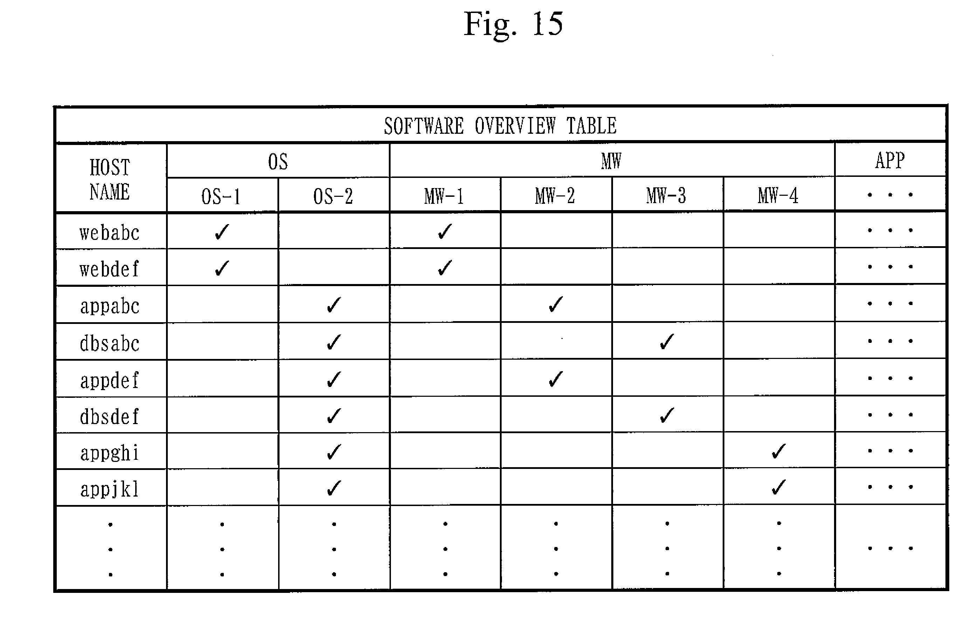

In this embodiment, a software overview table as shown in Fig. 15, which shows the overview of the software implemented in each device (host name), is prepared in a design information storage part 24.

In Fig. 15, OS represents an operation system, MW represents middleware, and APP represents an application program.

The checked item indicates software implemented in the device.

In this embodiment, the software overview table of Fig. 15 is used in place of or together with the host name/IP address correspondence table 204 of Embodiment 1.

More specifically, according to this embodiment, in S411 of Fig. 8, when a design information integration part 26 selects a device to be paired with the redundancy source device (main-type component) extracted in S408 from among the redundancy counterpart devices (standby-system components) extracted in S409, the software overview table of Fig. 15 is used.

The design information integration part 26 extracts a device implemented with the same software group as the software group implemented in the redundancy source device, from the software overview table, and determines the extracted device as the device to be pared with the redundancy source device.

Except for this, the operation of Embodiment 4 is the same as that of Embodiment 1.

As described above, the accuracy in determining the redundancy counterpart can be improved by utilizing a plurality of pieces of design information such as the software overview table.

This embodiment has explained a dependency generation system for system configuration information, in which the design information input part receives as input, a plurality of types of design information, and the accuracy in recognizing the combination of the redundancy configurations is improved in the design information integrating part.

### Embodiment 5.

In Embodiments 1 to 4 described above, the system design information is held in the configuration management apparatus 2. Embodiment 5 shows a case in which the system design information is held in an external document management system.

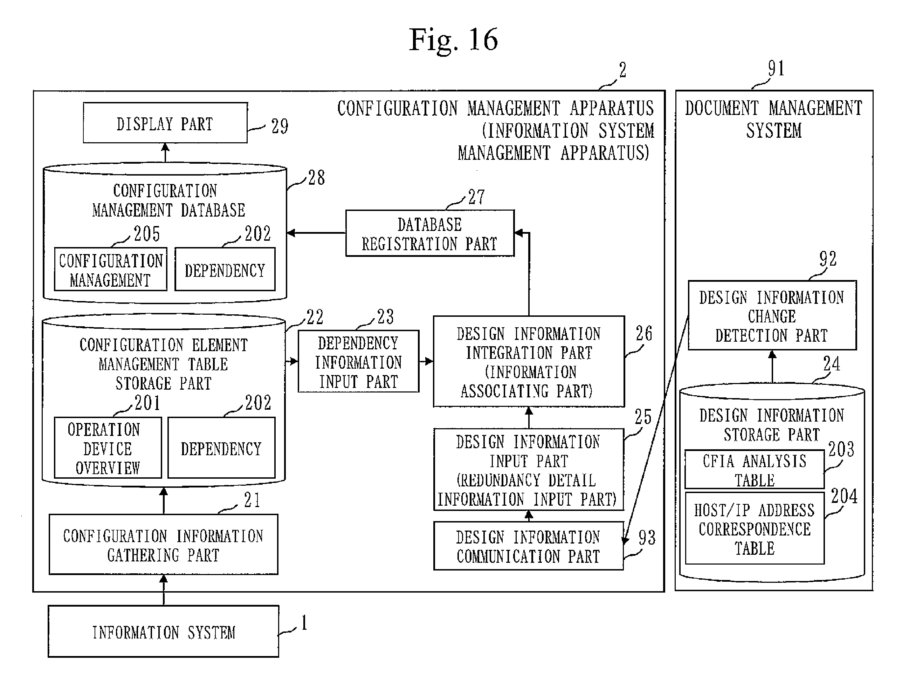

Fig. 16 shows a system configuration of this embodiment.

In Fig. 16, elements other than a document management system 91, a design information change detection part 92, and a design information communication part 93 are the same as those shown in Fig. 1, and their description will be omitted.

The document management system 91 manages the system design information of a plurality of business systems as a whole.

The document management system 91 includes the design information change detection part 92.

The design information change detection part 92 detects a change in the system design information.

The configuration management apparatus 2 includes the design information communication part 93.

The design information communication part 93 communicates with the design information change detection part 92.

The operation will now be described.

When the design information change detection part 92 detects a change in the system design information, the design information change detection part 92 notifies this to the design information communication part 93 on the configuration management apparatus 2, and re-acquiring of the system design information (re-execution of S405 to S412 in the flow of Fig. 8) is carried out.

Since the latest system design information can be used as described above, when a system failure occurs, the system dependencies, the redundancy counterpart, and the redundancy method in the latest system design information can be displayed on the view. Thus, a failure can be treated correctly.

This embodiment has explained a dependency generation system for system configuration information, in which the dependencies between system configuration elements are updated automatically by detecting an update of the design information stored in an external document management system.

### Embodiment 6.

In Embodiments 1 to 5 described above, only the dependencies between the system configuration elements are generated and displayed. Embodiment 6 shows an example where a coordination with system failure monitor information is implemented.

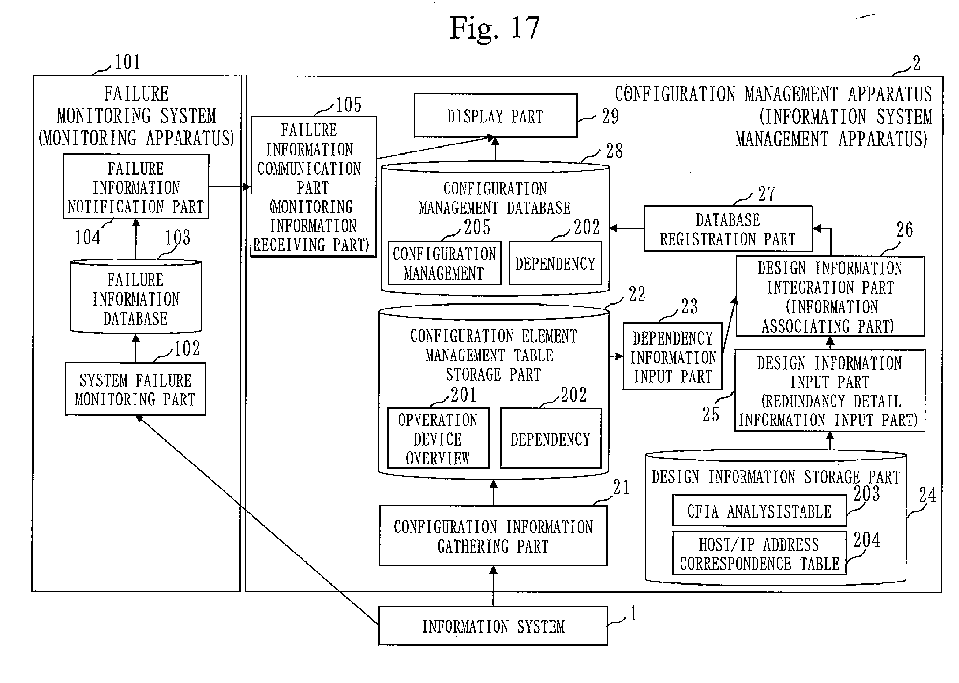

Fig. 17 shows a system configuration of this embodiment.

In Fig. 17, elements other than elements 101 to 105 are the same as those of Fig. 1, and their description will be omitted.

A failure monitoring system 101 has a system failure monitoring part 102 which monitors a failure in an information system 1, a failure information database 103 which stores failure information (an example of monitoring result information) when a failure is detected as the result of monitoring, and a failure information notification part 104 which notifies failure information to the outside.

The failure monitoring system 101 is an example of a monitoring apparatus.

A configuration management apparatus 2 is provided with a failure information communication part 105.

The failure information communication part 105 receives failure information from the failure monitoring system 101.

The failure information communication part 105 is an example of a monitoring result information receiving part.

The operation will now be described.

The system failure monitoring part 102 on the failure monitoring system 101 detects a failure through polling communication to the information system 1 or a notification from a server apparatus or network device, and records the content (host name, failure message) of the detected failure onto the failure information database 103.

The failure information notification part 104 detects an update of the failure information database 103, and notifies the update content to the failure information communication part 105 on the configuration management apparatus 2.

A display part 29 displays information on a failure occurrence status of the system configuration elements on a view 3 in addition to the information of Embodiment 1.

The view 3 displays, in addition to the information of Embodiment 1, devices where a failure occurs and whether or not the device is switched because of the failure.

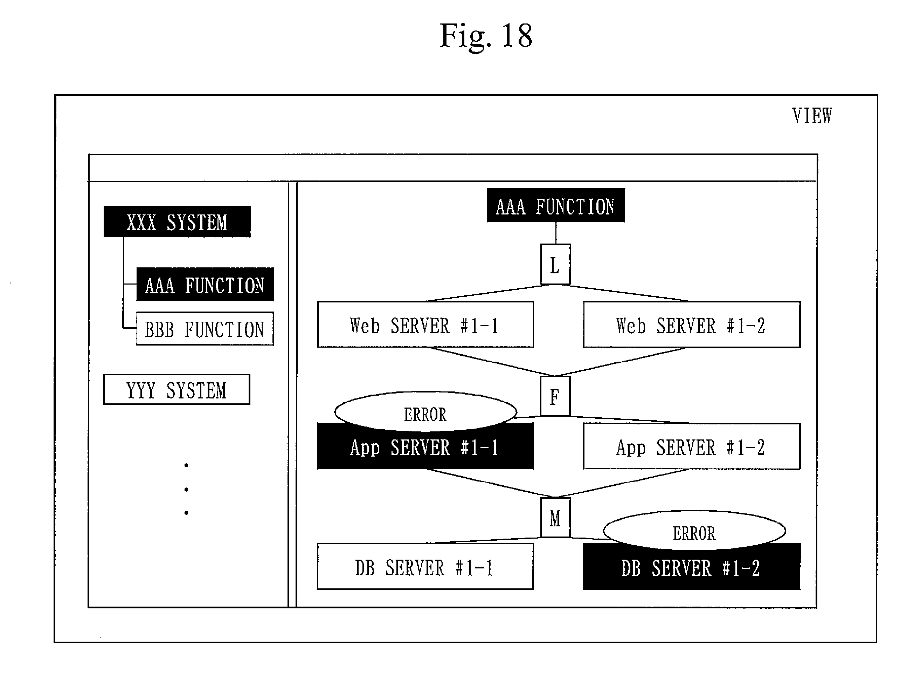

In the example of the view 3 of Fig. 18, a device in reversed display (in white letters on a dark background) is a device not in service currently, a device displayed as "ERROR" is a device where a failure occurs, and a device displayed as "STAND-BY" is an alternate device of a redundant configuration, being in a standby state.

It can be seen from this example, that a Web server #1-1 and a Web server #1-2 operate normally by load balance, that an App server #1-1 fails and is correctly switched over to an App server #1-2, and a DB server #1-1 operates normally and a DB server #1-2 as its manual alternate device is in the standby state.

As described above, since failure monitoring information is also displayed additionally, a portion needed to be treated in a failure treatment becomes clear. Thus, failure treatment can be executed quickly.

This embodiment has explained a dependency generation system for system configuration information, which receives failure information on a system configuration element from the failure monitoring system and displays location of the failure and whether the redundancy configuration is switched when displaying information in the configuration management database.

Finally, a hardware configuration example of the configuration management apparatus 2 shown in Embodiments 1 to 6 will be described.

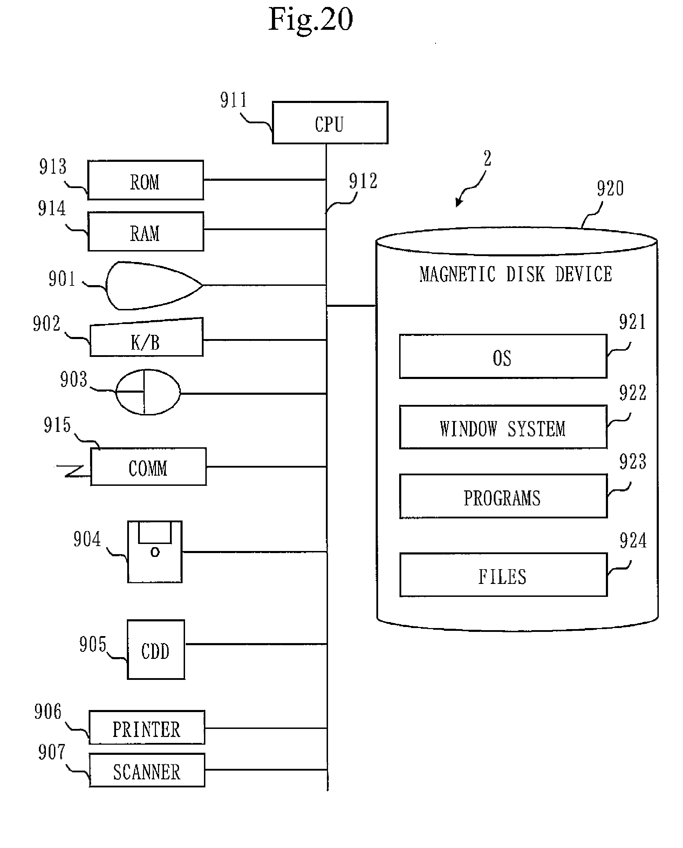

Fig. 20 shows an example of the hardware resource of the configuration management apparatus 2 shown in Embodiments 1 to 6.

Note that the configuration of Fig. 20 is merely an example of the hardware configuration of the configuration management apparatus 2. The hardware configuration of the configuration management apparatus 2 is not limited to the configuration shown in Fig. 20, but another configuration may also be possible.

Referring to Fig. 20, the configuration management apparatus 2 is provided with a CPU 911 (Central Processing Unit; also referred to as a central processing device, processing device, computation device, microprocessor, microcomputer, or processor) that executes programs.

The CPU 911 is connected to, for example, a ROM (Read Only Memory) 913, a RAM (Random Access Memory) 914, a communication board 915, a display device 901, a keyboard 902, a mouse 903, and a magnetic disk device 920 via a bus 912, and controls these hardware devices.

Furthermore, the CPU 911 may be connected to an FDD 904 (Flexible Disk Drive), a compact disk device 905 (CDD), a printer device 906, or a scanner device 907. In place of the magnetic disk device 920, a storage device such as an SSD (Solid State Drive), an optical disk device, or a memory card (registered trademark) read/write device may be employed.

The RAM 914 is an example of a volatile memory. The storage media of the ROM 913, the FDD 904, the CDD 905, and the magnetic disk device 920 are examples of a nonvolatile memory. These memories are examples of the storage device.

The "configuration element management table storage part 22", "design information storage part 24", and "configuration management database 28" described in Embodiments 1 to 6 are realized by the RAM 914, the magnetic disk device 920, and the like.

The communication board 915, keyboard 902, mouse 903, scanner device 907, and the like are examples of an input device.

The communication board 915, display device 901, printer device 906, and the like are examples of an output device.

The communication board 915 is connected to a network.

For example, the communication board 915 is connected to a LAN (Local Area Network), the Internet, a WAN (Wide Area Network), or a SAN (Storage Area Network).

The magnetic disk device 920 stores an operating system 921 (OS), a window system 922, programs 923, and files 924.

The CPU 911 executes each program of the programs 923 utilizing the operating system 921 and the window system 922.

The RAM 914 temporarily stores at least some programs of the operating system 921 and application programs which are executed by the CPU 911.

The RAM 914 also stores various types of data necessary for the processing performed by the CPU 911.

The ROM 913 stores the BIOS (Basic Input Output System) program. The magnetic disk device 920 stores the boot program.

When booting the configuration management apparatus 2, the BIOS program in the ROM 913 and the boot program in the magnetic disk device 920 are executed. The BIOS program and boot program boot the operating system 921.

The programs 923 include a program that executes the function described as a "part" (other than a "storage part"; this applies to the following description) in Embodiments 1 to 6. The program is read and executed by the CPU 911.

The files 924 store, in the form of a file, information, data, signal values, and variable values indicating the results of the processings described as "determining", "analyzing", "comparing", "associating", "updating", "setting", "registering", "selecting", "inputting", "outputting", and the like in Embodiments 1 to 6.

An encryption key, decryption key, random value, parameter, and the like may be stored, in the form of a file, in a storage medium such as a disk or memory.

The "files" and "databases" are stored in the recording medium such as the disk or memory.

The information, data, signal values, variable values, and parameters stored in the storage medium such as the disk or memory are read out to the main memory or cache memory by the CPU 911 through a read/write circuit.

The readout information, data, signal values, variable values, and parameters are used for the operation of the CPU such as extraction, search, look-up, comparison, arithmetic operation, computation, processing, edit, output, print, and display.

During the operation of the CPU including extraction, search, look-up, comparison, arithmetic operation, computation, processing, edit, output, print, and display, the information, data, signal values, variable values, and parameters are temporarily stored in the main memory, register, cache memory, buffer memory, or the like.

The arrows in the flowcharts explained in Embodiments 1 to 6 mainly indicate input/output of data and signals.

The data and signal values are stored in a recording medium such as: the memory of the RAM 914, the flexible disk of the FDD 904, the compact disk of the CDD 905, or the magnetic disk of the magnetic disk device 920; or an optical disk, mini disk, or DVD.

The data and signals are transmitted online via the bus 912, a signal line, a cable, or other transmission media.

The "part" described in Embodiments 1 to 6 may be a "circuit", "device", or "equipment"; or a "step", "procedure", or "processing".

Namely, with the steps, procedures, and processings shown in the flowcharts explained in Embodiments 1 to 6, the "information system management method" according to the present invention can be implemented.

The "part" may be implemented as firmware stored in the ROM 913.

Alternatively, the "part" may be practiced by only software; by only hardware such as an element, a device, a substrate, or a wiring line; by a combination of software and hardware; or furthermore by a combination of software, hardware, and firmware.

The firmware and software are stored, as programs, in a recording medium such as a magnetic disk, flexible disk, optical disk, compact disk, mini disk, or DVD.

The program is read by the CPU 911 and executed by the CPU 911.

That is, the program causes the computer to function as the "part" of Embodiments 1 to 6. Alternatively, the program causes the computer to execute the procedure and method of the "part" of Embodiments 1 to 6.

In this manner, the configuration management apparatus 2 shown in Embodiments 1 to 6 are computers each comprising a CPU being a processing device; a memory, magnetic disk, or the like being a storage device; a keyboard, mouse, communication board, or the like being an input device; and a display device, communication board, or the like being an output device.

As described above, the functions expressed as the "part" are implemented using these processing device, storage device, input device, and output device.

### Reference Signs List

1: information system; 2: configuration management apparatus; 3: view; 21: configuration information gathering part; 22: configuration element management table storage part; 23: dependency information input part; 24: design information storage part; 25: design information input part; 26: design information integration part; 27: database registration part; 28: configuration management database; 29: display part; 61: view; 91: document management system; 92: design information change detection part; 93: design information communication part; 101: failure monitoring system; 102: system failure monitoring part; 103: failure information database; 104: failure information notification part; 105: failure information communication part; 201: operation device overview table; 202: dependency table; 203: CFIA analysis table; 204: host name/IP address correspondence table; 205: configuration management table

## Claims

1. An information system management apparatus which manages an information system including a plurality of system configuration elements which are each made to have redundancy using two or more components, the information system management apparatus comprising:
a dependency information input part which receives as input, dependency information generated from communication with a component in operation of each system configuration element and describing the component in operation of each system configuration element and a dependency between the system configuration elements;
a redundancy detail information input part which receives as input, redundancy detail information that describes a redundancy detail of each system configuration element;
an information associating part which associates the redundancy detail described in the redundancy detail information to the component in operation of each system configuration element, the component being described in the dependency information; and
a display part which displays the component in operation of each system configuration element and a dependency between the system configuration elements, the component and the dependency being described in the dependency information, and displays, based on associating by the information associating part, the redundancy detail of each system configuration element in correspondence with displaying the component in operation of each system configuration element.

2. The information system management apparatus according to claim 1, which manages the information system where redundancy methods practiced are not uniform among the system configuration elements,
wherein the redundancy detail information input part receives as input, redundancy detail information that describes a redundancy method in each system configuration element, as the redundancy detail in each system configuration element,
wherein the information associating part associates the redundancy method described in the redundancy detail information to the component in operation of each system configuration element, the component being described in the dependency information, and
wherein the display part displays, based on associating by the information associating part, the redundancy method in each system configuration element in correspondence with displaying the component in operation of each system configuration element.

3. The information system management apparatus according to claim 2,
wherein the redundancy detail information input part receives as input, for each system configuration element, redundancy detail information that describes either one of load balance, failover cluster, and cold standby, as the redundancy method.

4. The information system management apparatus according to any one of claims 1 to 3,
wherein the redundancy detail information input part receives as input, redundancy detail information that describes two or more components used for redundancy in each system configuration element, as the redundancy detail in each system configuration element,
wherein the information associating part associates an inactive component among the two or more components described in the redundancy detail information, to the component in operation of each system configuration element, the component in operation being described in the dependency information, and
wherein the display part displays, based on associating by the information associating part, the inactive component among the two or more components of each system configuration element in correspondence with displaying the component in operation of each system configuration element.

5. The information system management apparatus according to claim 4, which manages the information system where a plurality of components used in the plurality of system configuration elements are each set with a communication address, the communication address being common within a predetermined range among two or more components used in the same system configuration element,
wherein the redundancy detail information input part receives, as input,
redundancy detail information in which, among the two or more components used for redundancy, a main-system component employed as a main system is described in association with a corresponding system configuration element while a standby-system component employed as a standby system is described not in association with the corresponding system configuration element, and
communication address information in which a communication address of each component is described,
wherein the information associating part
extracts, for each system configuration element, the main-system component from the redundancy detail information, and extracts, based on the communication address information, a standby-system component having a communication address which is common, within a predetermined range, with the main-system component extracted, from the redundancy detail information, and
associates an inactive component in the main-system component and the standby-system component which are extracted of each system configuration element, to the component in operation of each system configuration element, the component in operation being described in the dependency information, and
wherein the display part displays, based on associating by the information associating part, the inactive component in the main-system component and the standby-system component of each system configuration element, in correspondence with displaying the component in operation of each system configuration element.

6. The information system management apparatus according to claim 4, which manages the information system where a plurality of components used in the plurality of system configuration elements are each set with an ID (Identifier), the ID being common within a predetermined range among two or more components used in the same system configuration element,
wherein the redundancy detail information input part receives, as input,
redundancy detail information in which, among the two or more components used for redundancy, a main-system component employed as a main system is described in association with a corresponding system configuration element while a standby-system component employed as a standby system is described not in association with the corresponding system configuration element, and
ID information in which an ID of each component is described,
wherein the information associating part
extracts, for each system configuration element, the main-system component from the redundancy detail information, and extracts, based on the ID information, a standby-system component having an ID which is common, within a predetermined range, with the main-system component extracted, and
associates an inactive component in the main-system component and the standby-system component which are extracted of each system configuration element, to the component in operation of each system configuration element, the component in operation being described in the dependency information, and
wherein the display part displays, based on associating by the information associating part, the inactive component in the main-system component and the standby-system component of each system configuration element, in correspondence with displaying the component in operation of each system configuration element.

7. The information system management apparatus according to claim 4, which manages the information system where a plurality of pieces of software are implemented in each of a plurality of components used in the plurality of system configuration elements such that combinations of the software implemented coincide among two or more components used in the same system configuration element while combinations of the software implemented in components are different among the system configuration elements,
wherein the redundancy detail information input part receives, as input,
redundancy detail information in which, among the two or more components used for redundancy, a main-system component employed as a main system is described in association with a corresponding system configuration element while a standby-system component employed as a standby system is described not in association with the corresponding system configuration element, and
implemented software information in which a combination of software implemented is described for each component,
wherein the information associating part
extracts, for each system configuration element, the main-system component from the redundancy detail information, and extracts, based on the implemented software information, a standby-system component with a combination of implemented software that coincides with a combination of implemented software of the main-system component extracted, and
associates an inactive component in the main-system component and the standby-system component which are extracted of each system configuration element, to the component in operation of each system configuration element, the component in operation being described in the dependency information, and
wherein the display part displays, based on associating by the information associating part, the inactive component in the main-system component and the standby-system component of each system configuration element, in correspondence with displaying the component in operation of each system configuration element.

8. The information management device according to claim 1, which manages a plurality of information systems which are each made to have redundancy,
wherein the dependency information input part receives as input, dependency information for each information system,
wherein the redundancy design information input part receives as input, redundancy design information for each information system,
wherein the information associating part compares dependency information of the respective information systems, and
wherein the display part, when it is turned out that, as a result of comparison of the dependency information of the respective information systems by the information associating part, the same system configuration element is included in two or more information systems redundantly,
displays a component in operation of each system configuration element of each of the two or more information systems, and dependencies among the system configuration elements, to indicate that the same system configuration element is included in the two or more information systems redundantly, and
displays, for each information system, the redundancy detail of each system configuration element in correspondence with displaying the component in operation of each system configuration element.

9. The information system management apparatus according to claim 1,
wherein the redundancy detail information input part, each time the redundancy detail information is updated, receives as input, updated redundancy detail information, and
wherein the information associating part, each time the updated redundancy detail information is received as input by the redundancy detail information input part,
associates the redundancy detail described in the updated redundancy detail information to the component in operation of each system configuration element, the component being described in the dependency information.

10. The information system management apparatus according to claim 1, further comprising
a monitoring result information receiving part which receives monitoring result information that notifies a monitoring result, from a monitoring apparatus which monitors the information system,
wherein the display part displays the redundancy detail of each system configuration element and the monitoring result notified by the monitoring result information, in correspondence with displaying the component in operation of each system configuration element.

11. The information system management apparatus according to claim 10,
wherein the monitoring result information receiving part receives information notifying at least either one of a fact that an abnormality occurs in a component in any one system configuration element and a fact that a component where an abnormality occurs is replaced by another component in any one system configuration element, as the monitoring result information.

12. The information system management apparatus according to claim 1,
wherein the dependency information input part receives as input, CMDB (Configuration Management Database) information, as the dependency information, and
wherein the redundancy detail information input part receives as input, CFIA (Component Failure Impact Analysis) information, as the redundancy detail information.

13. An information system management method for managing an information system including a plurality of system configuration elements which are each made to have redundancy using two or more components, the information system management method comprising:
receiving as input, dependency information generated from communication with a component in operation of each system configuration element and describing the component in operation of each system configuration element and a dependency between the system configuration elements;
receiving as input, redundancy detail information that describes a redundancy detail of each system configuration element;
associating the redundancy detail described in the redundancy detail information to the component in operation of each system configuration element, the component being described in the dependency information; and
displaying the component in operation of each system configuration element and a dependency between the system configuration elements, the component and the dependency being described in the dependency information, and displaying, based on the associating, the redundancy detail of each system configuration element in correspondence with displaying the component in operation of each system configuration element.

14. A program which causes a computer which manages an information system including a plurality of system configuration elements which are each made to have redundancy using two or more components, to execute:
a dependency information input process of receiving as input, dependency information generated from communication with a component in operation of each system configuration element and describing the component in operation of each system configuration element and a dependency between the system configuration elements;
a redundancy detail information input process of receiving as input, redundancy detail information that describes a redundancy detail of each system configuration element;
an information associating process of associating the redundancy detail described in the redundancy detail information to the component in operation of each system configuration element, the component being described in the dependency information; and
a displaying process of displaying the component in operation of each system configuration element and the dependency between the system configuration elements, the component and the dependency being described in the dependency information, and displaying, based on associating by the information associating process, the redundancy detail of each system configuration element in correspondence with displaying the component in operation of each system configuration element.
